# EUROPEAN PATENT APPLICATION

(11) **EP 1 533 759 A1**
(43) Date of publication of application: **25.05.2005**
(21) Application number: 04256773.5
(22) Date of filing: 03.11.2004
(51) Int. Cl.: G07C 9/00, G06K 9/00

(54) **Biometric system**

(30) Priority: 19.11.2003 GB 0326955
(71) Applicant: NCR INTERNATIONAL INC., Dayton, Ohio 45479 (US)
(72) Inventor: Colley, Andrew, Methven Walk Dundee DD2 3FJ (GB)
(74) Representative: Williamson, Brian

(57) **Abstract**

A biometric system (10) for assisting a user in providing a biometric reading is described. The system (10) comprises a biometric capture unit (12) for capturing biometric data from a user; and feedback means (30) for providing the user with an indication of the extent to which a measurement has been captured. The feedback means (30) may be implemented by one or more light emitting diodes, or a projected light, either of which is located adjacent the biometric capture unit (12).

## Description

The present invention relates to a biometric system, and particularly to a biometric system for improving capture of a human characteristic by a biometric sensor. The invention also relates to a self-service terminal incorporating such a biometric system.

Biometrics is the measurement of some physical or biological trait or characteristic pertaining to an individual for use in confirming or determining the individual's identity.

Biometric systems are typically used in applications where secure access is required. Secure access may relate to physical locations (such as parts of a building), electronic devices and systems (such as automated teller machines, cellular telephones, personal computers), and software applications.

Secure access may be provided by a user typing in data, such as login codes or passwords. However, these can be compromised relatively easily if a third party becomes aware of the data to be typed in. Secure access may also be provided by identification card and personal identification number (PIN) combinations, such as is commonly required at automated teller machines (ATMs). However, this can also be compromised if the card details and the PIN are obtained by a third party.

Biometric systems have the advantage that a trait of an individual is measured to determine if that individual should be allowed access to a secure area or device. This makes it much more difficult for a third party to gain access because no data entry occurs. However, biometric systems have the disadvantage that it is relative difficult to obtain an accurate reading from an individual, particularly if the individual is a member of the public who has not been trained in how to use the biometric system, and if the system is used in an unattended environment.

One example of an application where biometric systems are used with members of the public is ATMs. An ATM is a particular type of self-service terminal (SST). SSTs are generally public-access devices that are designed to allow a user to conduct a transaction or to access information in an unassisted manner and/or in an unattended environment. SSTs typically include some form of tamper resistance so that they are inherently resilient. SSTs allow users to obtain information or to conduct a transaction, and include: ATMs; non-cash kiosks that allow users to access information (for example, to view reward points on a reward card the user inserts into the SST); and kiosks that accept payment for services (for example, Web surfing kiosks, kiosks that allow users to buy goods, and such like). The term SST has a relatively broad meaning and includes vending machines.

When a member of the public uses a biometric system on an ATM, it is common for the individual to present his or her characteristic to be sensed in a non-optimal manner. For example, this is a particular problem when the biometric system includes a fingerprint sensor. Individual users may not put all of his or her finger on the sensor such that the main area or core of the finger, where the fingerprint is mainly located, is not located in the optimum position for scanning. The core of the finger print is not located at the tip of the finger, as some users believe, it is in fact located on a line at the same distance from the end of the finger as the finger nail on the top side of the finger. Poor sensing may result in either the biometric capture process having to be repeated, or the individual being denied access.

It is among the objects of an embodiment of the present invention to obviate or mitigate one or more of the above disadvantages or other disadvantages associated with prior art biometric systems.

According to a first aspect of the present invention there is provided a biometric system comprising: a biometric capture unit for capturing biometric data from a user; and feedback means located adjacent the biometric capture unit for providing the user with an indication of the extent to which a measurement has been captured.

The feedback means may comprise means for providing a visual indication of how the user should move to ensure that a better measurement is obtained.

The visual indication may be a single colour, or varying shades or colours.

Preferably, the colour of the visual indication is altered to provide additional feedback on the capture of their fingerprint. Most preferably, the colour red is utilized to illustrate a less than optimum finger location and the colour green is utilized to illustrate an optimum finger location.

Preferably, the system comprises a projector arranged to project a line of light projected onto the biometric capture unit, so as to provide the user with feedback regarding the capture of their fingerprint.

Alternatively, the system comprises one or more light emitting diodes (LEDs) located adjacent the biometric capture unit (12), so as to provide the user with feedback regarding the capture of their fingerprint.

This aspect of the present invention has the advantage that a user is automatically assisted in providing an accurate biometric reading.

A further advantage is that live feedback is provided in a self-service environment to assist in obtaining a high quality biometric reading.

According to a second aspect of the present invention there is provided a self-service terminal incorporating a biometric system comprising: a biometric capture unit for capturing biometric data from a user; and feedback means located adjacent the biometric capture unit for providing the user with an indication of the extent to which a measurement has been captured.

The SST may be an ATM, an information kiosk, or such like.

According to a third aspect of the present invention there is provided a method of assisting a user in providing a biometric reading, the method comprising: capturing biometric data from a user utilizing a biometric capture unit; and providing the user with an indication of the extent to which a measurement has been captured, said indication being provided adjacent the biometric capture unit.

The method may comprise the further step of: indicating to the user how a portion of the user's body being measured is aligned relative to an ideal position for measuring that portion of the body.

The method may be implemented in a self-service terminal.

Embodiments of the present invention will now be described, by way of example, with reference to the accompanying drawings, in which:
Fig. 1 is a simplified schematic front view of a self-service terminal incorporating a biometric system according to a first embodiment of the present invention;
Fig. 2 is a block diagram showing internal modules in the terminal of Fig. 1;
Fig. 3 is a flowchart illustrating the steps involved in authenticating a user of the terminal of Fig. 1; and

Figs 4A & 4B are a pictorial view of a part of a self-service terminal (a fascia) illustrating two different finger print units in accordance with the present invention.

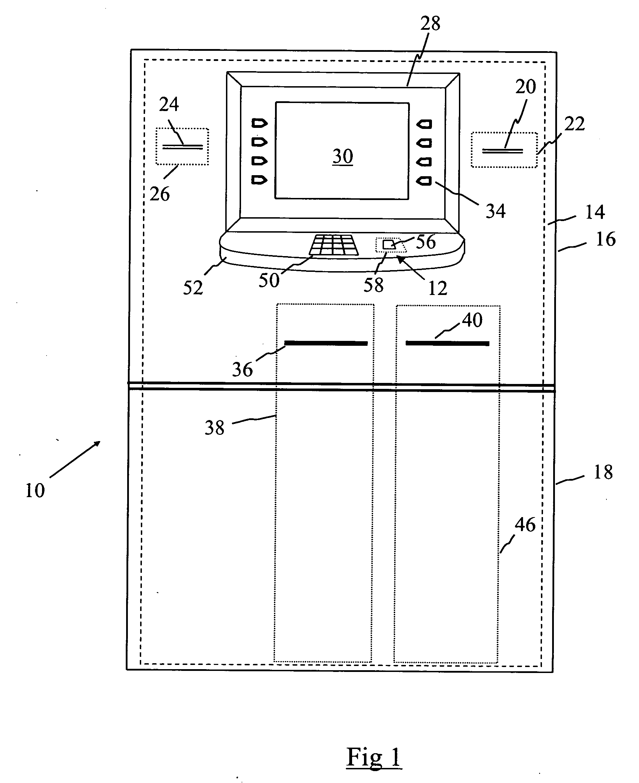

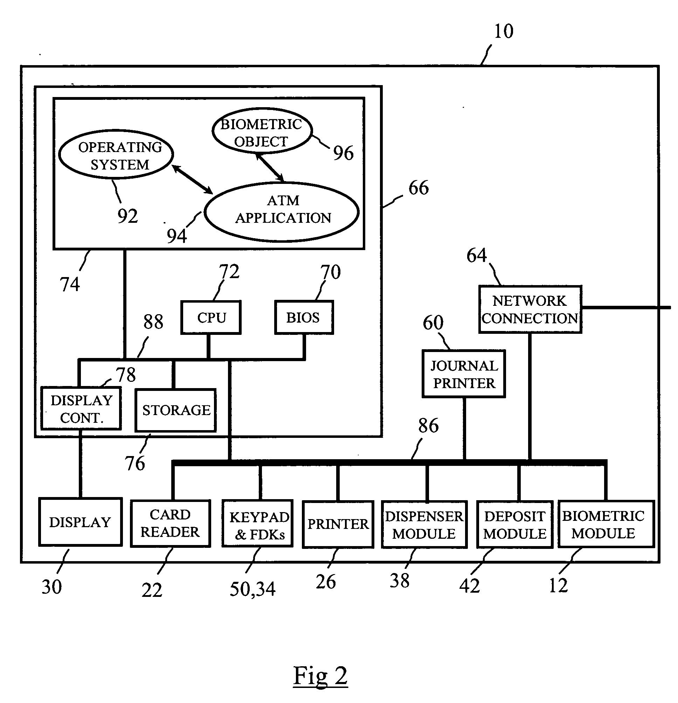

Reference is now made to Figs 1 and 2, which show a self-service terminal 10 in the form of an automated teller machine (ATM) including a biometric module 12 according to one embodiment of the invention. The ATM 10 has a chassis 14 to which is pivotably coupled a plastic fascia 16 covering an upper portion of the chassis 14. A door 18 is hingably coupled to a lower portion of the chassis 14. When the fascia 16 is hinged open and the door 18 is swung open, an operator can gain access to modules located within the ATM 10.

The fascia 16 provides a user interface to allow a user to interact with the ATM 10. In particular, the fascia 16 has apertures aligning with modules mounted in the chassis 14 when the fascia 16 is pivoted to the closed position. The fascia 16 defines: a card reader slot 20 aligning with a card reader module 22 mounted within the chassis 14; a receipt printer slot 24 aligning with a receipt printer module 26 mounted within the chassis 14; a display aperture 28 aligning with a combined display 30 and associated function display keys (FDKs) 34 mounted as a module within the chassis 14; a dispenser slot 36 aligning with a dispenser module 38 mounted within the chassis 14; and a deposit aperture 40 aligning with a deposit module 42 mounted within the chassis 14.

The fascia 16 also includes an encrypting keypad 50 mounted on a shelf portion 52 extending outwardly from beneath the display aperture 28. The encrypting keypad 50 also receives input from the FDKs 34.

The biometric module 12 is mounted in the shelf portion 52 and includes (i.) a sensor 56 for receiving a human finger and for capturing fingerprint details, and (ii.) an interface 58 for encrypting and relaying a captured fingerprint image. The sensor 56 protrudes interface 58 is mounted behind the shelf portion 52.

The biometric sensor 56 is a Fingerloc (trade mark) AF-S2 fingerprint sensor, available from Authentec, Inc., P.O. Box 2719, Melbourne, FL 32902-2719, U.S.A.

The sensor 56 comprises an array of pixels arranged in rows and columns. A fingerprint image is scanned by digitizing outputs from each row in a programmed sequence. The outputs can be analysed to determine the centre of the user's finger, for example, in terms of an x and y co-ordinate.

Internally, the ATM 10 also includes a journal printer module 60 for creating a record of every transaction executed by the ATM 10, a network connection module 64 for accessing a remote authorisation system (not shown), and a controller module 66 (in the form of a PC core) for controlling the operation of the ATM 10, including the operation of the modules.

The controller 66 comprises a BIOS 70 stored in nonvolatile memory, a microprocessor 72, associated main memory 74, storage space 76 in the form of a magnetic disk drive, and a display controller 78 in the form of a graphics card.

The display module 30 is connected to the controller module 66 via the graphics card 78 installed in the controller module 66. The other ATM modules (12, 22, 26, 34, 38, 42, and 50) are connected to the ATM controller 66 via a device bus 86 and one or more internal controller buses 88.

In use, the main memory 74 is loaded with an ATM operating system kernel 92, an ATM application 94, and a biometric capture object 96. As is well known in the art, the operating system kernel 92 is responsible for memory, process, task, and disk management. The ATM application 94 is responsible for controlling the operation of the ATM 10. In particular, the ATM application 94 provides the sequence of screens used in each transaction (referred to as the transaction flow); monitors the condition of each module within the ATM (state of health monitoring); and obtains authorisation for transactions from a remote transaction authorisation server (not shown).

The term "screen" is used herein to denote the graphics, text, controls (such as menu options), and such like, that are presented on an SST display; the term "screen" as used herein does not refer to the hardware (that is, the display) that presents the graphics, text, controls, and such like. Typically, when a transaction is being entered at an SST, a series of screens are presented in succession on the SST display, the next screen displayed being dependent on a user entry or activity relating to the current screen. For example, a first screen may request a user to insert a card; once a card has been inserted a second screen may invite the user to enter his/her PIN; once the final digit of the PIN has been entered, a third screen may invite the user to select a transaction; and so on.

The biometric capture object 96 receives data from the sensor 56, processes this received data, and forwards the processed data to the ATM application 94 for use in authenticating a user, as will be described in more detail below.

The controller 66 (particularly the biometric capture object 96) and the biometric module 12 together comprise a biometric system. The display 30 provides a feedback means for this biometric system.

Prior to conducting a transaction, a user enrolls by providing a sample of his fingerprint. This enrolment typically occurs at a bank branch or other secure facility so that additional forms of identification (for example, a driver's licence, a passport, or such like) may be provided to ensure that the person submitting the fingerprint is who they claim to be.

To provide a sample, the user places his finger on a fingerprint sensor similar to sensor 56 shown in Fig 1. The user's fingerprint is sensed and a template is generated based on the user's fingerprint, as is known to those of skill in the art. The template is a data file that is produced by applying a conventional mathematical operation to measurements taken from the captured fingerprint. Each user has a'unique template.

When a user subsequently presents himself at the ATM 10 and places his finger on the sensor 56, the sensor 56 captures the fingerprint and the biometric capture object 96 operates on the newly-captured fingerprint to produce a test data file.

The test data file is then used in one of two ways, depending on whether the biometric system operates in recognition mode or in verification mode.

In verification mode, the user claims an identity, for example by inserting an identification card. The template for that user is retrieved by the biometric capture object 96 and compared with the test data file to determine if the user's identity is verified.

In identification mode, no user identification is presented except the biometric characteristic. The test data file is compared with all stored templates to determine if the test data file matches any of the stored templates.

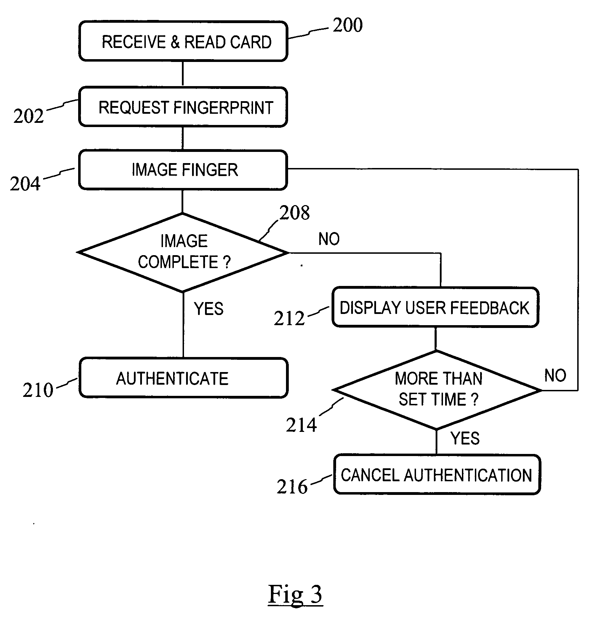

Fig 3 is a flowchart illustrating steps performed by the ATM 10 to authenticate a user 98.

In this example, an identification card is used. The user inserts the identification card into the card reader module 22 of the ATM 10. The card reader module 22 receives this card, reads identification information encoded therein, and forwards this information to the controller 66. The controller 66 uses the read information to access a unique user reference and a template corresponding to this unique user reference (step 200). The template may be stored locally at the ATM 10 or at a remote host (not shown).

The ATM 10 then requests, via a screen on display 30, the user to place a finger on the fingerprint sensor 56 (step 202).

The ATM 10 then captures an image of the finger using the biometric module 12 (step 204).

The biometric capture object 96 executing in the ATM's memory 74 receives the captured image and determines if a complete image of the user's fingerprint has been recorded (step 208).

If a complete image has been recorded, then authentication proceeds as for a conventional ATM 10 implementing a biometrics authentication system (step 210). This involves operating on the captured image to generate a test data file and comparing the test data file with the template for that user to determine if there is a match. If there is a match then the user's identity is validated, if there is not a match then the user's identity is not validated.

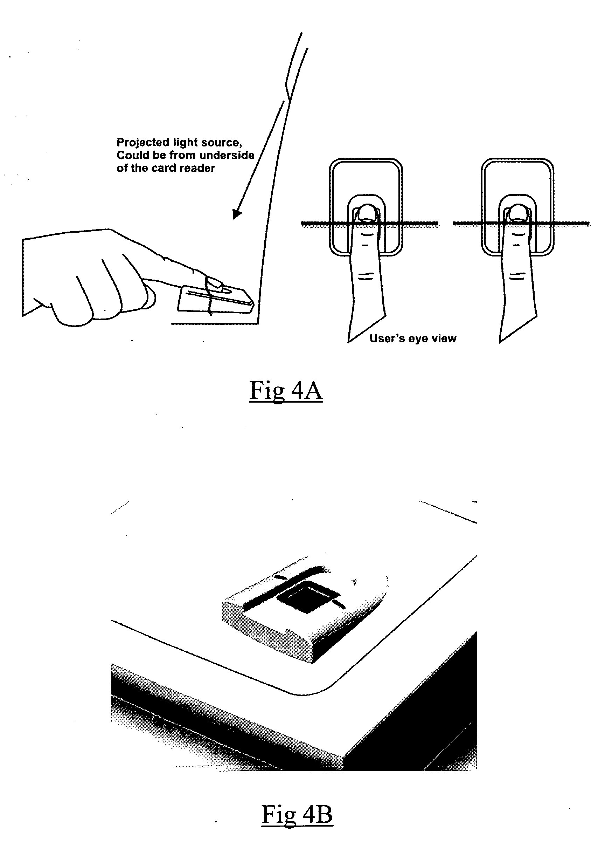

Returning to step 208, if a complete image has not been recorded, then the ATM 10 presents an indication to the user to adjustment his or her finger user (step 212), see Figs 4A & 4B.

The ATM 10 determines how much time has elapsed since a reading was first taken (step 214). If this time period exceeds a predetermined limit, for example 45 seconds, then the ATM 10 cancels the authentication procedure (step 216) and returns the card to the user 98. The ATM 10 may display a screen informing the user 98 of how to obtain training in using the biometric sensor 56.

If the time period does not exceed the predetermined time limit, then the ATM 10 reverts to step 204, where the user's finger is imaged.

Reference will now be made to Figs 4 A & 4 B, which illustrate how the user feedback is produced in accordance with the present invention.

Fig. 4A illustrates a first apparatus for and method of providing light as a visual guide at the biometric capture unit 12, which is to project light from a higher level on the fascia of the ATM using either a prism to focus a light source, or using a projected beam such as a laser similar to a bar code reader. Being projected from a point above the device, the fixed beam falls on the centre of the sensor 12. The user is then instructed, as detailed above, to place their finger on the sensor aligning the beam with the base of their nail. Given the above projection the beam would always be visible to the user, allowing them the ability to reposition accurately. This light could be used as a status indicator as to the quality of the fingerprint as described below.

Fig. 4B illustrates a second apparatus for and method of providing illuminated guidance, in this case utilizing small lens embedded within the housing for the sensor behind which are PCB mounted LEDs. These lens are located within a line which passes through the centre line of the sensor 12. The user is again invited by the transaction lead through to place their finger on the biometric capture unit or sensor 12. The location of the biometric is then highlighted as the light strip is activated. The user is then given instructions to align the base of their nail with the light. As the fingerprint is scanned the light is made to pulse providing feed back that something is happening, otherwise, given the lack of moving parts, the biometric remains an inanimate object with no metaphor to indicate a process. Should the fingerprint taken during that reading be unsuitable the light would turn to red, if it is suitable the light would be turned, or remain, green. As there is a tendency for the user to look at the biometric sensor while they are using it this feed back from the source would prevent constant cross reference with the screen display, without a need for the user to refocus their attention on the screen display.

Various modifications may be made to the above-described embodiments within the scope of the present invention, for example, different colours may be used.

## Claims

1. A biometric system (10) comprising a biometric capture unit (12) for capturing biometric data from a user; and feedback means (30) located adjacent the biometric capture unit (12) for providing the user with an indication of the extent to which a measurement has been captured.

2. A system according to claim 1, wherein the feedback means provides a visual indication to the user how the user should move to ensure that a better measurement is obtained.

3. A system according to claim 2, wherein the visual indication is a single colour.

4. A system as claimed in claim 2, wherein the visual indication contains varying shades or colours.

5. A system as claimed in claim 4, wherein the colour of the visual indication is altered to provide additional feedback on the capture of their fingerprint.

6. A system as claimed in claim 5, wherein the colour red is utilized to illustrate a less than optimum finger location.

7. A system as claimed in claim 5 or claim 6, wherein the colour green is utilized to illustrate an optimum finger location.

8. A system as claimed in any preceding claim, further comprising a projector arranged to project a line of light projected onto the biometric capture unit (12), so as to provide the user with feedback regarding the capture of their fingerprint.

9. A system as claimed in any preceding claim, further comprising one or more light emitting diodes (LEDs) located adjacent the biometric capture unit (12), so as to provide the user with feedback regarding the capture of their fingerprint.

10. A self-service terminal (10) incorporating a biometric system comprising: a biometric capture unit (12) for capturing biometric data from a user; and feedback means (30) located adjacent the biometric capture unit (12) for providing the user with an indication of the extent to which a measurement has been captured.

11. A terminal according to claim 9, wherein the terminal comprises an automated teller machine.

12. A method of assisting a user in providing a biometric reading, the method comprising: capturing biometric data from a user; and providing the user with an indication of the extent to which a measurement has been captured, said indication being provided adjacent the biometric capture unit.

13. A method according to claim 12, further comprising the step of: indicating to the user how a portion of the user's body being measured is aligned relative to an ideal position for measuring that portion of the body.

14. A method as claimed in claim 12 or claim 13, wherein the colour of the visual indication is altered to provide additional feedback on the capture of their fingerprint.

15. A method as claimed in claim 14, wherein the colour red is utilized to illustrate a less than optimum finger location.

16. A method as claimed in claim 14, wherein the colour green is utilized to illustrate an optimum finger location.

17. A method as claimed in claim12 or claim 13, wherein a flashing light is utilized to illustrate to the user that the biometric capture unit is operating.
